# EUROPÄISCHE PATENTANMELDUNG

(11) **EP 0 745 467 A2**
(43) Veröffentlichungstag der Anmeldung: **04.12.1996**
(21) Anmeldenummer: 96108572.7
(22) Anmeldetag: 30.05.1996
(51) Int. Cl.: B29C 45/17

(54) **Verdichtungsvorrichtung**

(30) Priorität: 31.05.1995 DE 19519968
(71) Anmelder: Bauer, Heinz, 81475 München (DE); Bernhardt, Achim Roland, 63512 Hainburg (DE)
(72) Erfinder: Bauer, Heinz, 81475 München (DE); Bernhardt, Achim Roland, 63512 Hainburg (DE)
(74) Vertreter: Hering, Hartmut, Dipl.-Ing.

(57) **Zusammenfassung**

Es wird eine Verdichtungsvorrichtung (V, V', V'') angegeben, welche unter Zuordnung zu wenigstens zwei relativ zueinander beweglichen Werkzeugteilen (10, 11), wie Platten, Aufspannplatten oder dergleichen, eines Werkzeugs (W) betreibbar ist. Die Verdichtungsvorrichtung (V, V', V'') oder die Einheiten derselben umfaßt oder umfassen jeweils wenigstens eine Arbeitskammer (6; 6₁ bis 6₄) und wenigstens ein in derselben bewegliches Arbeitselement. In der Arbeitskammer befindet sich ein gasförmiges Medium, welches unter einem beliebigen Ausgangsdruck stehen kann. Beispielsweise während der Schließbewegung der Werkzeugteile (10, 11) des Werkzeugs (W) werden die Arbeitselemente (7) in den Arbeitskammern (6; 6₁ bis 6₄) derart bewegt, daß das Volumen in den Arbeitskammern (6; 6₁ bis 6₄) verkleinert wird und hierdurch im Zuge der Schließbewegung das gasförmige Medium in der Arbeitskammer (6; 6₁ bis 6₄) verdichtet wird. Das so verdichtete, gasförmige Medium kann dann einem Verbraucher (8) mit oder ohne Zwischenspeicherung zugeführt werden. Insbesondere ist eine derartige Verdichtungsvorrichtung (V, V', V'') für eine Spritzgußmaschine bestimmt, bei der in einem Kavitätshohlraum (17) eine Gasdruckbeaufschlagung erfolgen soll.

Die Verdichtungsvorrichtung (V, V', V'') kann in das Formwerkzeug (W) insgesamt oder in eines der beiden Formwerkzeugteile (10, 11), wie Platten, Aufspannplatten oder dergleichen, integriert sein oder es kann als Anbaueinrichtung ausgelegt werden und an den entsprechenden Werkzeugformteilen (10, 11) bedarfsabhängig angebracht werden. Gegebenenfalls kann die Verdichtungsvorrichtung (V, V', V'') mehrere Verdichtungsstufen umfassen, wozu die einzelnen Arbeitskammern (6; 6₁ bis 6₄) hintereinandergeschaltet werden. Zwischen den Verdichtungsstufen wird gegebenenfalls eine Kühlung vorgenommen.

## Beschreibung

Die Erfindung befaßt sich mit einer Verdichtungsvorrichtung, welche unter Zuordnung zu wenigstens zwei relativ zueinander beweglichen Werkzeugteilen eines Werkzeugs betreibbar ist.

In der nachstehenden Beschreibung und den Ansprüchen sind unter dem Begriff "Werkzeugteil" nicht nur das Formwerkzeug selbst, sondern auch allgemein dessen Träger sowie Platten, Aufspannplatten, Schieber oder dergleichen zu verstehen.

Es gibt verschiedene Bauformen von Verdichtungsvorrichtungen der vorstehend genannten Art. Hinsichtlich der Betriebsweise unterteilt man derartige Verdichter insbesondere in motorisch angetriebene oder hydraulisch/pneumatisch angetriebene Verdichter. Alle diese Verdichter sind als gesonderte Aggregate ausgeführt, die beispielsweise zur Druckgasversorgung eingesetzt werden können. Daher ist mit dem Einsatz solcher Verdichtungsvorrichtungen ein zusätzlicher Bau- und Kostenaufwand erforderlich, wodurch auch erhöhte Betriebskosten entstehen.

Bei aus mehreren Werkzeugteilen, welche relativ zueinander beweglich sind, gebildeten Werkzeugen, bei denen es sich insbesondere um Formwerkzeug, wie Spritzgießformwerkzeuge handelt, werden häufig zur Führung und wechselseitigen Ausrichtung der relativ zueinander beweglichen Formwerkzeugteile beispielsweise Bolzen genommen, welche von zugeordnete Aufnahmebohrungen im jeweils anderen Werkzeugteil aufgenommen und darin beweglich sind. Beim Schließen des Formwerkzeugs bewegen sich die Bolzen in der Aufnahmebohrung bis zur Nähe von deren Grund und beim Öffnen des Formwerkzeugs bewegen sich diese in Gegenrichtung.

Insbesondere bei Formwerkzeugen für das Spritzgießen wird ein von den Formwerkzeugteilen gebildeter Kavitätshohlraum zur Ausbildung des Formteils mit einem Gasdruck beaufschlagt. Hierzu kann beispielsweise ein Injektor oder eine Düse vorgesehen sein, welche in den Kavitätshohlraum mündet, und die mit einer Druckquelle verbunden ist. Hierüber erfolgt eine Beaufschlagung im Kavitätshohlraum mittels eines unter einem vorbestimmten Druck stehenden, gasförmigen Mediums, wobei der Druck gegebenenfalls steuerbar ist. Für die Druckbeaufschlagung werden hierbei gesonderte Einrichtungen benötigt, welche nicht nur zu einer Vergrößerung der Gestehungskosten, sondern auch zu einer Vergrößerung der Betriebskosten beitragen.

Die Erfindung zielt daher darauf ab, eine Verdichtungsvorrichtung bereitzustellen, welche auf kostengünstige Weise die Erzeugung eines verdichteten, gasförmigen Mediums gestattet.

Nach der Erfindung wird hierzu eine Verdichtungsvorrichtung, welche unter Zuordnung zu wenigstens zwei relativ zueinander beweglichen Werkzeugteilen, wie Platten, Aufspannplatten oder dergleichen, eines Werkzeugs betreibbar ist, und wenigstens ein in wenigstens einer Arbeitskammer bewegbares Arbeitselement umfaßt, bereitgestellt, welche sich dadurch auszeichnet, daß im Zusammenwirken mit der Relativbewegung der Werkzeugteile, wie Platten, Aufspannplatten oder dergleichen, mittels des Arbeitselements eine Verdichtung eines gasförmigen Mediums in der Arbeitskammer, welche zur Umgebung hin dicht abgeschlossen ist, erfolgt, wobei sich das gasförmige Medium unter einem beliebigen Druck in der Arbeitskammer befindet.

Nach der Erfindung wird somit eine Verdichtungsvorrichtung geschaffen, bei der die Relativbewegung von wenigstens zwei Werkzeugteilen, wie Platten, Aufspannplatten oder dergleichen, zur Verdichtung eines gasförmigen Mediums in einer Arbeitskammer genutzt wird. Somit erhält man nach der Erfindung eine Verdichtungsvorrichtung, welche sich platzsparend anordnen und auslegen läßt, und die keine zusätzlichen Antriebsmittel benötigt. Hierdurch erhält man einen vereinfachten Aufbau einer Verdichtungsvorrichtung zur Erzeugung eines verdichteten gasförmigen Mediums, welche im Zusammenwirken mit der Relativbewegung der Werkzeugteile, wie Platten, Aufspannplatten oder dergleichen, betreibbar ist. Somit lassen sich sowohl die Anlagengestehungskosten als auch die Anlagenbetriebskosten in nennenswerter Weise reduzieren. Die erfindungsgemäße Verdichtungsvorrichtung gestattet somit eine kostengünstige Druckerzeugung oder Druckerhöhung, ohne daß man gesonderte zusätzliche Druckerzeugungseinrichtungen benötigt.

Vorzugsweise erfolgt die Verdichtung des Mediums in der Arbeitskammer der Verdichtungsvorrichtung beim Werkzeugschließvorgang und das so verdichtete Medium ist dann für einen Verbraucher nutzbar. Hierzu kann mit der Arbeitskammer ein Auslaßkanal verbunden sein, welcher ein ein Zurückströmen des verdichteten Mediums verhinderndes Einwegventil enthält. Bei dieser Auslegungsform der Verdichtungsvorrichtung kann somit die aufeinanderzu gerichtete Bewegung von wenigstens zwei Werkzeugteilen, wie Platten, Aufspannplatten oder dergleichen, beim Werkzeugschließvorgang ausgenutzt werden, und ferner kann das so erzeugte verdichtete Medium beispielsweise unmittelbar anschließend zu einer Druckbeaufschlagung eines von den Werkzeugteilen gebildeten Kavitätshohlraumes eingesetzt werden. Das im Auslaßkanal vorgesehen Einwegventil, welches ein Zurückströmen des in der Arbeitskammer verdichteten Mediums verhindert, hat die Aufgabe, bei einer Bewegung des Arbeitselements in einer solchen Richtung, daß das Volumen in der Arbeitskammer größer wird, eine Entspannung des bereits verdichteten Mediums wirksam auszuschließen.

Vorzugsweise ist das in der Arbeitskammer verdichtete Medium einem Kavitätshohlraum des Werkzeugs zur Druckbeaufschlagung zuführbar. Hierdurch wird eine kostengünstige Betriebsweise eines Formwerkzeugs mit Druckbeaufschlagung eines von demselben gebildeten Kavitätshohlraums ermöglicht.

Die Verdichtungsvorrichtung nach der Erfindung kann ferner so ausgelegt sein, daß das in der Arbeitskammer verdichtete Medium einem Speicher zuführbar ist, welcher wahlweise mit dem Verbraucher verbunden werden kann. Bei dieser Auslegung wird somit das in der Arbeitskammer verdichtete Medium nicht unmittelbar und direkt dem Verbraucher zugeführt, sondern es erfolgt eine Zwischenspeicherung in einem Speicher, welcher dann in Abhängigkeit von dem Bedarf des Verbrauchers entsprechend mit diesem verbunden werden kann.

Gemäß einer bevorzugten Ausführungsform nach der Erfindung umfaßt die Verdichtungsvorrichtung mehrere Arbeitskammer, welche über Verbindungskanäle zur Bildung einer Hintereinanderschaltung verbunden sind. Hierbei umfaßt die Verdichtungsvorrichtung durch die Hintereinanderschaltung der Arbeitskammern mehrere Verdichtungsstufen, so daß sich der Verdichtungsdruck von Arbeitskammer zu Arbeitskammer steigern läßt, um verdichtetes Medium mit unterschiedlichen Verdichtungsdrücken bereitzustellen, oder insgesamt gesehen eine sehr große Verdichtung mit Hilfe der erfindungsgemäßen Verdichtungsvorrichtung vornehmen zu können. Um die entsprechenden Verdichtungsstufen in den Arbeitskammern unterschiedlich wählen zu können, können die Arbeitselemente der zugeordneten Arbeitskammern unterschiedlich große Wirkflächen haben.

Gegebenenfalls kann zwischen den hintereinandergeschalteten Arbeitskammern eine Zwischenkühlung des verdichteten Mediums erfolgen, wozu man beispielsweise eine Zwischenkühlung mittels Wasser vornehmen kann.

Vorzugsweise ist die Auslegung bei der erfindungsgemäßen Verdichtungsvorrichtung derart getroffen, daß in der Arbeitskammer vor Beginn des Schließvorgangs über eine Zuleitung ein vorbestimmter Mediumdruck anliegt. In dieser Zuleitung kann ein Steuerventil angeordnet sein. Hierdurch kann man vor dem eigentlichen Verdichtungsvorgang beim Schließen des Formwerkzeugs einen vorbestimmten, wählbaren und mittels eines Steuerventils vorzugsweise steuerbaren Ausgangsdruck des gasförmigen Mediums in der Arbeitskammer oder den Arbeitskammern einstellen, um eine universelle Anpassung der Verdichtungsvorrichtung an die jeweils vorhandenen Gegebenheiten des Anwendungsfalles vornehmen zu können. Somit lassen sich gegebenenfalls unterschiedliche Endverdichtungsdrücke bei dem gasförmigen Medium erzielen.

Vorzugsweise arbeitet die Verdichtungsvorrichtung nach der Erfindung derart, daß bei geschlossenem Werkzeug der Druck konstant bleibt und gegebenenfalls eine zeitabhängige Druckbeaufschlagung vorgenommen wird, und daß beim Öffnen des Werkzeugs ein langsamer Druckabbau in der Arbeitskammer erfolgt, wobei vorzugsweise kurz vor dem vollständigen Öffnen des Werkzeugs über ein Hilfsventil ein Druckabbau auf Umgebungsdruckverhältnisse erfolgt. Hierdurch kann den gegebenenfalls erforderlichen Druckverhältnissen beim Öffnen des Werkzeugs sowie den Sicherheitsgesichtspunkten bei dem Betreiben einer gegebenenfalls zugeordneten Spritzgußmaschine Rechnung getragen werden.

Bezüglich der Anordnung und der Ausbildung der Verdichtungsvorrichtung nach der Erfindung gibt es mehrere Möglichkeiten. Beispielsweise können die Arbeitskammer und das Arbeitselement in die zugeordneten relativ beweglichen Werkzeugteile, wie Platten, Aufspannplatten oder dergleichen, integriert sein, so daß man eine kompakte Auslegung erreichen kann. Andererseits können die Arbeitskammer und das Arbeitselement gesondert an den relativ beweglichen Werkzeugteilen, wie Platten, Aufspannplatten oder dergleichen, angebaut sein und bei der Bewegung der Werkzeugteile zusammenwirken. In diesem Fall ist die Verdichtungsvorrichtung zwar an dem relativ beweglichen Werkzeugteil angeordnet, sie läßt sich aber gesondert hiervon herstellen und wird nachträglich eingebaut. Hierdurch kann man die Anzahl der Verdichtungsvorrichtungen sowie die Größe derselben an die jeweils geforderten Voraussetzungen anpassen.

Auch bezüglich der Anordnung von Arbeitskammer und Arbeitselement gibt es mehrere Möglichkeiten. Gemäß einer bevorzugten Ausführungsform sind die Arbeitskammer und das Arbeitselement dem beweglichen Werkzeugteil zugeordnet. Alternativ kann die Arbeitskammer an einem beweglichen Werkzeugteil und das Arbeitselement an einem stationären Werkzeugteil vorgesehen sein, so daß die Arbeitskammer und das bewegliche Arbeitselement unterschiedlichen Werkzeugteilen, wie Platten, Aufspannplatten oder dergleichen, des Werkzeugs zugeordnet sind. Natürlich kann die Auslegung gegebenenfalls auch umgekehrt gewählt werden.

Bei einer bevorzugten Ausführungsform kann das Arbeitselement von einem Bolzen an einem der Werkzeugteile gebildet werden, welcher an einer zugeordneten Aufnahmebohrung am anderen Werkzeugteil als Kolben wirkend aufgenommen ist. Der Bolzen und die Aufnahmebohrung können zugleich zur Führung der Werkzeugteile bei ihrer Relativbewegung beim Öffnungs- und Schließvorgang des Werkzeugs dienen. Bei dieser Auslegungsform wird die Verdichtungsvorrichtung von jenen Teilen gebildet, welche an sich bisher nur Führungsfunktionen bei einem derartigen Werkzeug hatten, so daß die zur Verwirklung der erfindungsgemäßen Verdichtungsvorrichtung gemäß dieser bevorzugten Ausführungsform erforderlichen zusätzlichen konstruktiven Maßnahmen sich mit nur noch geringem Zusatzaufwand verwirklichen lassen.

Vorzugsweise kommt die Verdichtungsvorrichtung nach der Erfindung bei einem Werkzeug in Form eines Spitzgießformwerkzeugs in einer Spritzgußmaschine zum Einsatz. Der Verbraucher kann hierbei von einem Injektor oder einer Düse gebildet werden, welche in den vom Formwerkzeug in der Schließstellung gebildeten Kavitätshohlraum mündet. Bei diesen Auslegungsformen ist somit die Verdichtungsvorrichtung dem eigentlichen Formwerkzeug, wie dem Spritzgießformwerkzeug, zugeordnet, so daß man die Druckbeaufschlagung des Kavitätshohlraums ohne separate Kompressoranlagen gegebenenfalls direkt oder indirekt vornehmen kann, wobei insbesondere auch störungsanfällige Leitungen und Verbindungsleitungen, welche zu dem noch Druckverluste mit sich bringen, vermieden werden können, da die Verdichtung in unmittelbarer Nähe des Kavitätshohlraums erfolgt und daher möglichst verlustfrei zur Druckbeaufschlagung desselben genutzt werden kann.

Wesentlich bei der erfindungsgemäßen Verdichtungsvorrichtung ist die Tatsache, daß man einerseits die Relativbewegung der Werkzeugteile, wie Platten, Aufspannplatten oder dergleichen, eines Werkzeugs, wie eines Formwerkzeugs für den Verdichtungsvorgang nutzt, und daß man andererseits eine effektiv arbeitende und möglichst wenig Platz in Anspruch nehmende Verdichtungsvorrichtung hat, die sich universell an die Platzverhältnisse bei den Formwerkzeugen anpassen und derart betreiben läßt, daß man auf die gewünschte Weise den in unmittelbarer Nähe angeordneten Verbraucher versorgen kann.

Die Erfindung wird nachstehend an Hand von bevorzugten Ausführungsformen unter Bezugnahme auf die beigefügte Zeichnung näher erläutert. Darin zeigt:
- Fig. 1: eine schematische Ansicht einer Verdichtungsvorrichtung, welche mehrere Arbeitskammern umfaßt, welche hintereinander geschaltet sein können und die zugeordneten Arbeitselemente zugleich als Führungsmittel dienen können,
- Fig. 2: eine schematische Querschnittsansicht zur Verdeutlichung einer Hintereinanderschaltung von mehreren Arbeitskammern,
- Fig. 3: eine schematische Ansicht einer Spritzgußmaschine mit einem beweglichen und einem stationären Werkzeugteil des Formwerkzeugs, wobei die Verdichtungsvorrichtung insgesamt dem beweglichen Werkzeugteil zugeordnet ist,
- Fig. 4: eine vergrößerte Ausschnittsansicht zur Verdeutlichung der konstruktiven Einzelheiten einer Anordnung umfassend Arbeitskammer und Arbeitselement einer Verdichtungsvorrichtung ausgehend von Figur 3,
- Fig. 5: eine Fig. 3 ähnliche schematische Ansicht einer Spritzgußmaschine, wobei die Verdichtungsvorrichtung in Schließstellung des Formwerkzeugs und bei durchgeführtem Verdichtungsvorgang gegenüber Fig. 3 verdeutlicht ist,
- Fig. 6: eine schematische Draufsicht auf ein bewegliches Formwerkzeugteil mit einer, mehrere Arbeitskammern und mehrere Arbeitselemente umfassenden Verdichtungsvorrichtung, welche dem beweglichen Formwerkzeugteil zugeordnet, aber an diesem angebaut ist, und
- Fig. 7: eine Draufsicht auf ein bewegliches Formwerkzeugteil, bei dem die Verdichtungsvorrichtung in das bewegliche Formwerkzeugteil integriert ist.

In den Figuren der Zeichnung sind gleiche oder ähnliche Teile mit denselben Bezugszeichen versehen.

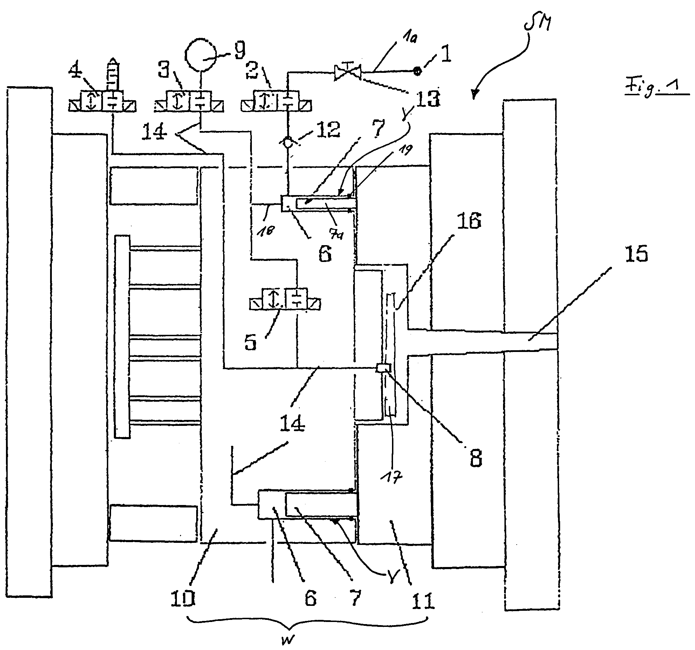

In Figur 1 ist schematisch eine Spritzgußmaschine SM verdeutlicht, welche ein Formwerkzeug W hat, welches ein bewegliches Werkzeugteil 10 und ein stationäres Werkzeugteil 11 umfaßt. Hierbei ist unter dem Begriff "Werkzeugteil" nicht nur das Formwerkzeug selbst, sondern auch allgemein dessen Träger sowie Platten, Aufspannplatten, Schieber oder dergleichen zu verstehen.

Bei dem in Figur 1 dargestellten Schließzustand des Formwerkzeugs W begrenzen die beiden Werkzeugteile 10 und 11 einen Raum zur Ausbildung eines Formkörpers 16, welcher einen Kavitätshohlraum 17 einschließt. In diesen Kavitätshohlraum 17 mündet ein Injektor oder eine Düse 8, welche eine Druckbeaufschlagung des Kavitätshohlraums 17 gestattet. Zuleitungsseitig von dem Injektor oder der Düse 8 ist ein Ventil 4 vorgesehen.

Das Werkzeug W umfaßt beim dort dargestellten Beispiel eine in die Spritzgußmaschine SM integrierte und insgesamt mit V bezeichnete Verdichtungsvorrichtung. Die dargestellte Verdichtungsvorrichtung V umfaßt beispielsweise wenigstens eine Arbeitskammer 6, beim dargestellten Beispiel zwei Arbeitskammern 6, welche gegenüber der Umgebung über eine Dichtung 19 dicht abgeschlossen ist. In der jeweiligen Arbeitskammer 6 ist ein Arbeitselement 7 angeordnet, welches beim dargestellten Beispiel von einem Bolzen 7a gebildet wird. Die Bolzen 7a wirken hierbei als Kolben in den Arbeitskammern 6 beweglich ausgebildet ist. Wie gezeigt können die Arbeitselemente 7 unterschiedliche Durchmesser haben, das heißt, sie haben unterschiedlich große Wirkflächen. Bei dem in Figur 1 unten dargestellten Arbeitselement 7 ist eine größere Wirkfläche als bei dem in der Zeichnung oben dargestellten Arbeitselement 7 vorhanden. Natürlich können die Arbeitselemente 7 auch übereinstimmende Durchmesser und übereinstimmende Wirkflächen aufweisen.

Mit 1 ist ein Mediumsanschluß verdeutlicht, durch den über eine Einlaßleitung 1a, in welcher ein Ventil 13, ein Ventil 2 und ein Einwegventil 12 angeordnet sind, ein gasförmiges Medium mit einem wählbaren Ausgangsdruck in die jeweilige Arbeitskammer 6 eingebracht werden kann. Bei dem wählbaren Druck kann es sich auch beispielsweise um den Umgebungsdruck handeln. Das Einwegventil 12 unterbindet ein Zurückströmen des gasförmigen Mediums aus der jeweiligen Arbeitskammer 6. Mit der jeweiligen Arbeitskammer 6 ist eine Auslaßleitung 14 verbunden, welche unter Zwischenschaltung eines Ventils 3 eine Verbindung - mit einem Speicher 9 bei der dargestellten Ausführungsform herstellt. Bei diesem Speicher 9 kann es sich um einen Zwischenspeicher handeln. Ferner ist in Figur 1 noch ein Einspritzkanal 15 gezeigt, über welchen die Spritzmasse dem von den Formwerkzeugteilen 10, 11 in der Schließstellung begrenzten Formhohlraum zum Ausbilden des Formkörpers 16 zugeleitet wird.

Die dort gezeigte Verdichtungsvorrichtung V wird hinsichtlich ihrer Arbeitsweise nachstehend näher erläutert. Wenn das Werkzeug W seine nicht dargestellte Öffnungsstellung einnimmt, in welcher das bewegliche Werkzeugteil 10 in Figur 1 beispielsweise in Richtung nach links gegenüber dem stationären Werkzeugteil 11 wegbewegt ist, sind die beiden Werkzeugteile 10, 11 in einem Abstand voneinander vorgesehen. Die Arbeitselemente 7 ragen in dieser Öffnungsstellung des Werkzeugs W geringfügig in die zugeordnete Arbeitskammer 6. Bei der Schließbewegung des Werkzeugs W bewegt sich nunmehr das bewegliche Werkzeugteil 10 in Richtung auf das stationäre Werkzeugteil 11 und die Arbeitselemente 7 verringern das Volumen der Arbeitskammern 6 und verdichten das darin befindliche gasförmige Medium. Wenn nun das Werkzeug W die in Figur 1 gezeigte Schließstellung einnimmt, ist der maximale Verdichtungsdruck der Verdichtungsvorrichtung V erreicht, und das verdichtete Medium wird aus der Arbeitskammer 6 über die Auslaßleitung 18 und das nunmehr offene Ventil 3 zu dem Speicher 9 abgegeben. Soll nunmehr der Kavitätshohlraum 17 über die Düse oder den Injektor 8 mit Gasdruck beaufschlagt werden, so wird das Ventil 5 geöffnet, um verdichtetes Medium in dem Kavitätshohlraum 17 zur Einwirkung zu bringen, wenn der Formkörper 16 bei geschlossenem Werkzeug W spritzgegossen wird. Diese Druckbeaufschlagung kann während des Einspritzens der Spritzmasse über den Einspritzkanal 15, vor dem Einspritzen oder nach demselben erfolgen. Nach einer gewissen Einwirkzeit des verdichteten Mediums in dem Kavitätshohlraum 17 werden die Ventile 2 und 4 geschlossen, und die Ventile 3 und 5 werden geöffnet. Dann werden die Ventile 5 und 3 geschlossen und das Ventil 4 wird geöffnet. Danach wird das bewegliche Werkzeugteil 10 wieder von dem stationären Werkzeugteil 11 abgerückt und das Werkzeug W nimmt dann wiederum seine Öffnungsstellung ein. Der fertiggestellte Formkörper 16 kann dann entnommen werden, und ein Spritzgießvorgang ist beendet.

Obgleich nicht näher dargestellt ist, kann man mit Hilfe der Verdichtungsvorrichtung V auch einen konstanten Druck aufrechterhalten, welcher in dem Kavitätshohlraum 17 in der Schließstellung des Werkzeugs W einwirkt. Bei einem langsamen Öffnen des Werkzeugs W kann dann ein Druckabbau dadurch erfolgen, daß das in der Arbeitskammer 6 eingeschlossene gasförmige Medium zurückgedrückt wird und hierbei eine Expansion erfolgt. Kurz bevor das Werkzeug W seine vollständig geöffnete Öffnungsstellung einnimmt, kann dann über ein nicht näher dargestelltes Hilfsventil ein Druckabbau auf atmosphärischen Umgebungsdruck vorgenommen werden.

Natürlich kann die Verdichtungsvorrichtung V auch ohne einen Speicher 9 betrieben werden, so daß dann das jeweils verdichtete, gasförmige Medium beispielsweise unmittelbar über die Auslaßleitung und ein zwischengeschaltetes Steuerventil 5 dem als Verbraucher dienenden Injektor oder der Düse 8 zeitabhängig steuerbar zugeführt werden kann.

Die jeweils in Verbindung mit der Verdichtungsvorrichtung V realisierbare Drucksteuerung und/oder die Zuführung zu einem Verbraucher, wie zu dem Injektor oder der Düse 8, werden jeweils abhängig von den gewünschten Erfordernissen und den Gegebenheiten der Spritzgußmaschine SM gewählt, und die voranstehend erläuterten Steuerungsbeispiele haben keinerlei beschränkenden Charakter. Wesentlich vielmehr ist es, daß die Verdichtungsvorrichtung V, welche die Arbeitskammer 6 und das Arbeitselement 7 umfaßt, so angeordnet und betreibbar ist, daß unter Ausnutzung beispielsweise der Schließbewegung des Werkzeugs W eine Verdichtung des in die Arbeitskammer 6 eingeschlossenen gasförmigen Mediums im Zusammenwirken mit den Formwerkzeugteilen 10, 11, wie Platten, Aufspannplatten oder dergleichen, erfolgt und vorgenommen wird. Das so mittels der Verdichtungsvorrichtung V erhaltene verdichtete, gasförmige Medium ist dann für einen Verbraucher nutzbar, bei dem es sich vorzugsweise um eine Einrichtung handelt, über die ein Kavitätshohlraum 17 mit einem erhöhten Gasdruck beaufschlagt wird. Demnach ist es für die Verdichtungsvorrichtung V nach der Erfindung wesentlich, daß man beim Anwendungsfall einer Spritzgußmaschine SM beispielsweise keine zusätzliche Druckerzeugungsanlage mit Versorgungseinrichtungen und dergleichen benötigt, sondern daß die Druckerzeugung und die Verdichtung unmittelbar im Zusammenwirken mit den relativ beweglichen Formwerkzeugteilen 10, 11 erfolgen. In Abhängigkeit von der Wahl der Größe der Wirkflächen der Arbeitselemente 7 sowie der zugeordneten Abmessungen der Arbeitskammer 6 können gegebenenfalls unterschiedliche Verdichtungsstufen und Endverdichtungsdrücke erreicht werden. Diese Abstimmung der Abmessungen wird vom Anwendungsfall und Bedarfsfall abhängig gemacht, so daß die Verdichtungsvorrichtung V universell anwendungspezifisch ausgelegt werden kann.

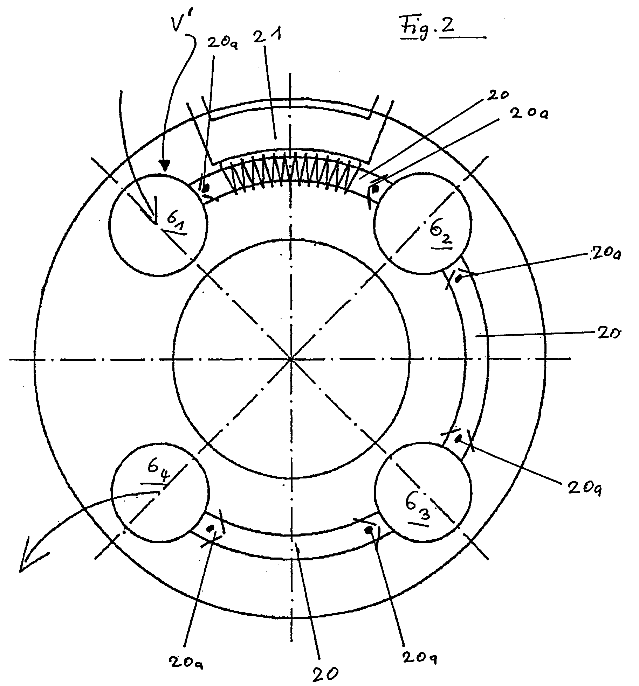

In Figur 2 ist schematisch eine Verdichtungsvorrichtung V' gezeigt, welche beim dargestellten Beispiel vier Arbeitskammern 6₁ bis 6₄ umfaßt. Die Arbeitskammern 6₁ bis 6₄ und die jeweils zugeordneten Arbeitselemente sind aus Übersichtlichkeitsgründen nicht näher dargestellt. Sie können beispielsweise wie in Figur 1 verdeutlicht ausgebildet sein. Über Verbindungsleitungen 20, welche jeweils eingangs- und ausgangsseitig Rückschlagventile 20a enthalten, sind jeweils die Ausgänge der Arbeitskammern 6₁ bis 6₄ zur Bildung einer hintereinander geschalteten Anordnung derselben verbunden. Mit dieser Hintereinanderschaltung der Arbeitskammern 6₁ bis 6₄ kann eine Verdichtung bei der Verdichtungsvorrichtung V' in mehreren Stufen erfolgen, da über die jeweilige Verbindungsleitung 20 das verdichtete gasförmige Medium als Ausgangsmedium in der jeweils nachfolgenden Arbeitskammer 6₂, 6₃ und 6₄ anliegt. Mit Pfeilen ist die Durchströmungsrichtung der Verdichtungsvorrichtung V' mit der hintereinander geschalteten Anordnung verdeutlicht. Das in der jeweiligen Arbeitskammer 6₁ bis 6₄ verdichtete Medium kann auf dem Weg über die Verbindungsleitung 20 zur jeweils nachgeschalteten Arbeitskammer gekühlt werden, wozu in Figur 2 eine Kühleinrichtung 21 schematisch angedeutet ist. Als Kühlmedium kann bei der Kühleinrichtung 21 Wasser eingesetzt werden. Hierdurch kann die Temperatur des verdichteten gasförmigen Mediums vor der Weiterverdichtung in der nächsten Arbeitskammer gekühlt werden. Obgleich in Figur 1 eine Kühleinrichtung 21 zwischen der Arbeitskammer 6₁ und 6₂ dargestellt ist, können natürlich noch weitere Kühleinrichtungen gegebenenfalls zwischen den Arbeitskammern 6₂ und 6₃ bzw. 6₃ und 6₄ vorgesehen sein. Die Kühlung mittels der Kühleinrichtung 21 ist von der Verdichtungsstufe und insbesondere von dem jeweils erzielbaren Verdichtungsdruck des gasförmigen Mediums abhängig.

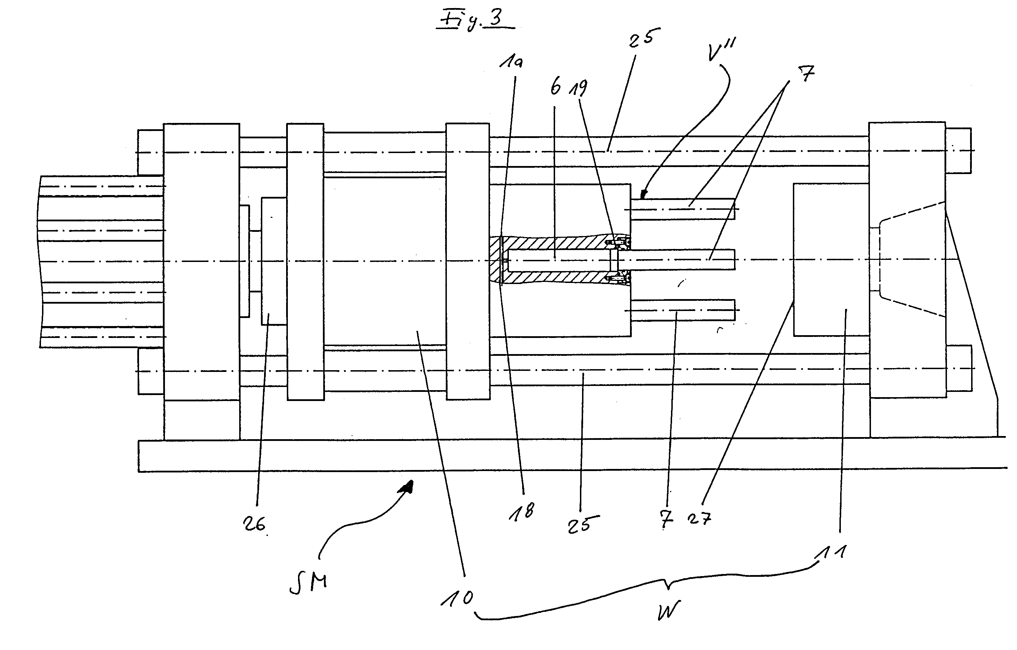

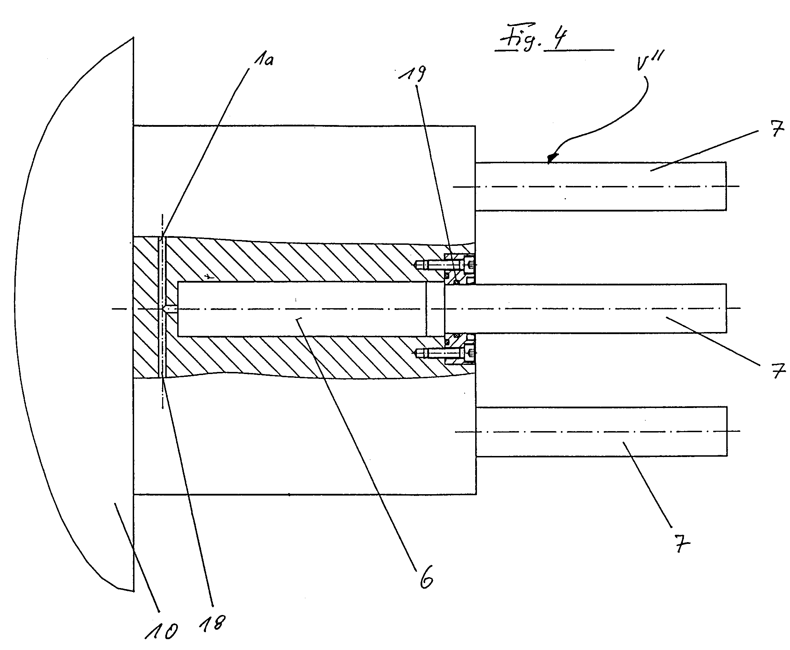

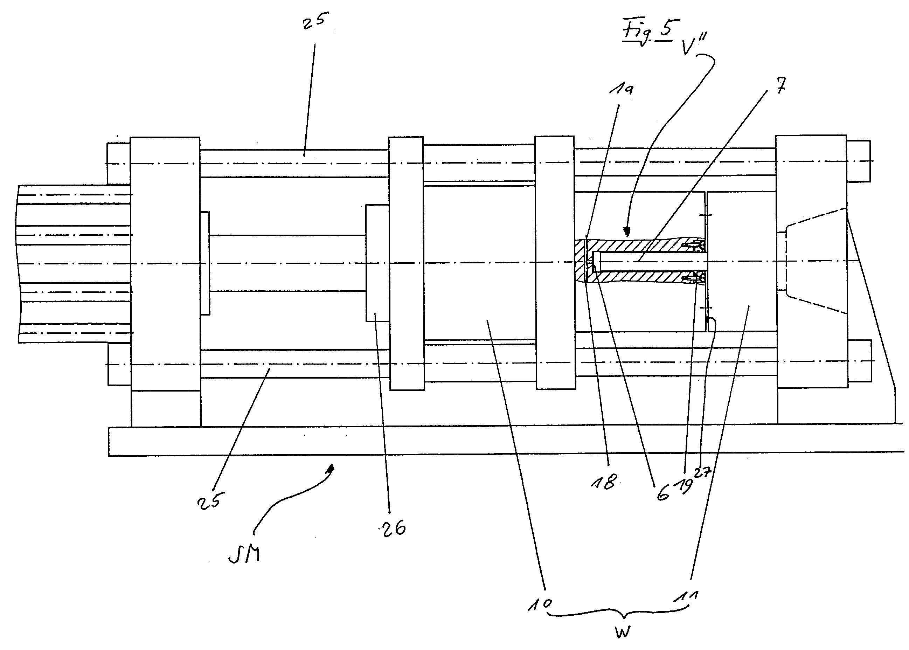

An Hand den Figuren 3 bis 5 wird eine weitere bevorzugte Ausführungsform einer schematisch dargestellten Spritzgußmaschine SM verdeutlicht. Nähere Einzelheiten des Formwerkzeugs W sowie der Formwerkzeugteile sind dort aus Übersichtlichkeitsgründen weggelassen. In Übereinstimmung mit der voranstehend beschriebenen Ausführungsform umfaßt die Spritzgußmaschine SM nach den Figuren 3 bis 5 ein bewegliches Formwerkzeugteil 10 und ein stationäres Formwerkzeugteil 11. Über Führungssäulen 25 sind die beiden Formwerkzeugteile 10, 11 relativbeweglich zueinander geführt und an einem Grundgestell angebracht. Über einen Schließkolben 26 wird das bewegliche Formwerkzeugteil 10 unter Führung durch die Führungsäulen 25 bei einer Schließbewegung in Richtung auf das feste Formwerkzeugteil 11 bewegt und zum Öffnen des Formwerkzeugs W wird das bewegliche Formwerkzeugteil 10 von dem festen Formwerkzeugteil 11 in Gegenrichtung wiederum wegbewegt. Das Werkzeug W ist in Figur 3 in seiner Öffnungsstellung gezeigt. Dem beweglichen Formwerkzeugteil 10 ist bei dieser Auslegungsform die dort insgesamt mit V'' bezeichnete Verdichtungsvorrichtung zugeordnet. Zur Verdeutlichung ist eine Arbeitskammer 6 sowie ein zugeordnetes Arbeitselement 7 im Ausschnitt dargestellt. Nähere Einzelheiten sind zur Verdeutlichung in Figur 4 gezeigt. Die Arbeitskammer 6 ist mittels entsprechender Einrichtungen stirnseitig dicht abgeschlossen, und ein Arbeitselement 7 ist derart eingesetzt, daß es in der in Figur 3 gezeigten Grundstellung geringfügig in die Arbeitskammer 6 ragt. Mit der Arbeitskammer 6 ist eine Einlaßleitung 1a und eine Auslaßleitung 18 verbunden, welche schematisch aus den Figuren zu ersehen sind. Ausgehend von der in Figur 3 gezeigten Öffnungsstellung des Werkzeugs W wird durch entsprechende Betätigung des Schließkolbens 26 das bewegliche Formwerkzeugteil 10 in Richtung auf das stationäre Formwerkzeugteil 11 bis zu der in Figur 5 dargestellten Schließstellung bewegt. Während dieser Schließbewegung kommen die Arbeitselemente 7 zur Anlage gegen eine entsprechende Fläche 27 des stationären Formwerkzeugteils 11 und die Arbeitselemente 7 werden in die zugeordnete Arbeitskammer 6 hineinbewegt. Hierdurch wird das in der Arbeitskammer 6 eingeschlossene Volumen verkleinert und das darin befindliche gasförmige Medium wird bei der Schließbewegung bis zur endgültigen Schließstellung des Formwerkzeugs W (siehe Figur 5) verdichtet. Das so in der jeweiligen Arbeitskammer 6 verdichtete, gasförmige Medium wird dann über eine Auslaßleitung 18 direkt oder indirekt einem Verbraucher - wie voranstehend erläutert - zugeführt. Die näheren Einzelheiten bezüglich der Ventilanordnungen und dergleichen sind bei dieser zweiten bevorzugten Ausführungsform nicht näher verdeutlicht und sinngemäß können die voranstehend erläuterten Steuerungen zusätzlich vorgesehen sein.

Wenn bei der Öffnungsbewegung des Werkzeugs W das bewegliche Formwerkzeugteil 10 ausgehend von Figur 5 in Richtung der Öffnungsstellung nach Figur 3 bewegt wird, kommen die Arbeitselemente 7 von der Fläche 27 des stationären Formwerkzeugteils 11 frei, und die Arbeitselemente 7 können sich wieder in ihre Ausgangsposition zurückbewegen, welche in Figur 3 gezeigt ist, so daß beim nächsten Schließvorgang wiederum eine entsprechende Verdichtung erfolgen kann, wie dies voranstehend erläutert worden ist.

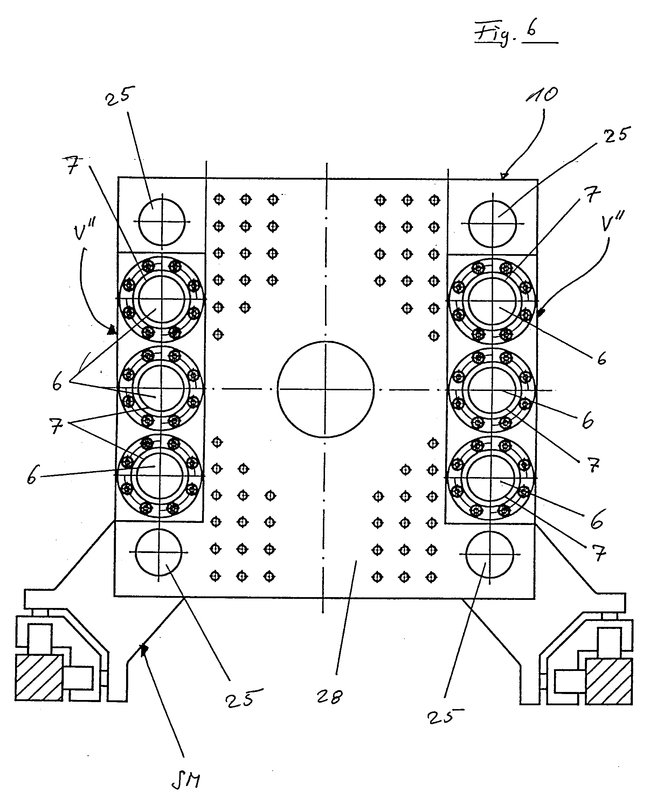

Ausgehend von der beispielhaft an Hand der Figuren 3 bis 5 gezeigten Auslegung einer Spritzgußmaschine SM ist in Figur 6 eine Draufsicht eines Ausführungsbeispiels eines beweglichen Formwerkzeugteils 10 gezeigt. Bei diesem Beispiel nach Figur 6 ist die Verdichtungsvorrichtung V'' an dem beweglichen Formwerkzeugteil 10 beispielsweise in gegenüberliegender Anordnung angebaut. Die Verdichtungsvorrichtung V'' mit den Arbeitskammern 6 und den Arbeitselementen 7 ist auf einer Aufspannplatte 28 des beweglichen Formwerkzeugteils 10 angebracht. Die Verdichtungsvorrichtung V'' nach Figur 6 umfaßt jeweils drei Einheiten auf jeder Seite, wobei jede Einheit von einer Arbeitskammer 6 und einem zugeordneten Arbeitselement 7 gebildet wird. Natürlich ist die Anzahl der Einheiten wählbar, und die Anzahl wird von dem jeweiligen Anwendungsfall sowie von den erforderlichen Verdichtungsdrücken bestimmt.

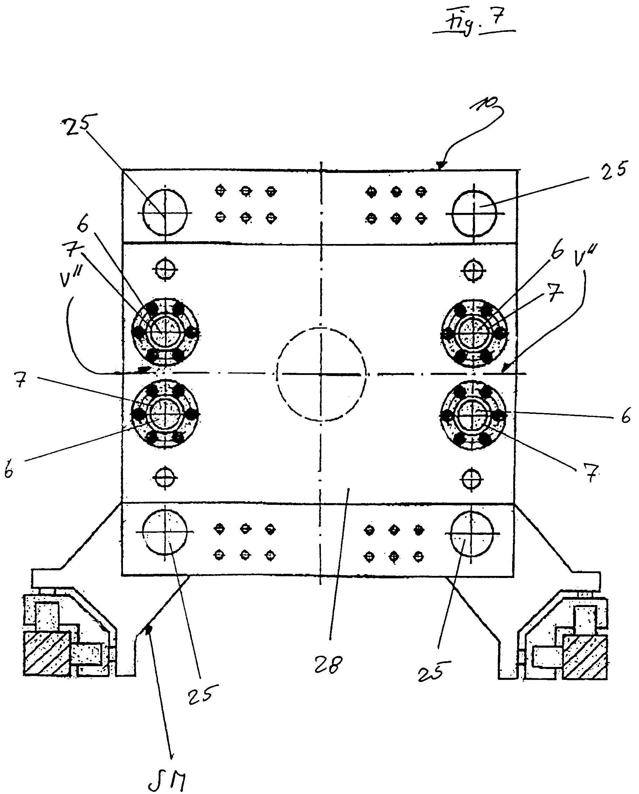

In Figur 7 ist eine Ausführungsvariante einer Verdichtungsvorrichtung V'' gezeigt. Im Unterschied zu der Auslegungsform nach Figur 6 sind die Einheiten der Verdichtungsvorrichtung V'' nach Figur 7 in das bewegliche Formwerkzeugteil 10 integriert. Bei einer Auslegungsform nach Figur 7 sind jeweils zwei Einheiten der Verdichtungsvorrichtung V'' auf jeder Seite des beweglichen Formwerkzeugteils 10 angeordnet. Hierbei handelt es sich um ein weiteres Ausführungsbeispiel, ohne die Erfindung hierauf zu beschränken.

Obgleich bei den Ausführungsformen nach den Figuren 3 bis 7 die Verdichtungsvorrichtung V'' umfassend die Arbeitskammern 6 und die Arbeitselemente 7 dem beweglichen Formwerkzeugteil 10 zugeordnet ist, braucht dies nicht notwendigerweise der Fall zu sein. So kann beispielsweise die Verdichtungsvorrichtung V'' in Abweichung von der dargestellten Ausführungsformen gegebenenfalls dem stationären Formwerkzeugteil 11 zugeordnet sein, wobei sie in dasselbe integriert sein kann oder an diesem angebaut sein kann. Ähnlich wie in Figur 1 dargestellt, kann das Arbeitselement 7 beispielsweise dem stationären Formwerkzeugteil 11 und die Arbeitskammer dem beweglichen Formwerkzeugteil 10 oder umgekehrt zugeordnet sein.

Alle diese Ausführungsvarianten sowie Kombinationen hiervon in integrierter oder angebauter Bauweise sind möglich und werden vom Schutzumfang der Erfindung erfaßt.

Allen voranstehend erörterten Ausführungsformen und Ausführungsvarianten ist gemeinsam, daß beispielsweise in Verbindung mit der Schließbewegung eines Werkzeugs W eine Verdichtung in einer Arbeitskammer 6 einer Verdichtungsvorrichtung V, V', V'' erfolgt, um ein verdichtetes, gasförmiges Medium bereitzustellen, welches einem Verbraucher, beispielsweise einem Injektor oder einer Düse 8 zugeführt werden kann. Die Steuerungen und Regelungen der Verdichtungsvorrichtung V, V' und V'' können dann in entsprechender Weise durch Zwischenschaltung eines Speichers 9 oder ohne einen solchen in Abhängigkeit von den Erfordernissen verwirklicht werden.

### Bezugszeichenliste

- V, V', V'': Verdichtungsvorrichtung insgesamt
- SM: Spritzgußmaschine
- W: Werkzeug, Aufspannplatte bzw. Formerkzeug
- 1: Mediumsanschluß
- 1a: Einlaßleitung
- 2: Ventil
- 3: Ventil
- 4: Ventil
- 5: Ventil
- 6: Arbeitskammer
- 6₁ bis 6₄: Arbeitskammern in hintereinandergeschalteter Anordnung
- 7: Arbeitselement
- 7a: Bolzen
- 8: Verbraucher bzw. Injektor oder Düse
- 9: Speicher
- 10: bewegliches Werkzeugteil, wie Platte oder dergl.
- 11: stationäres Werkzeugteil, wie Platte oder dergl.
- 12: Einwegventil
- 13: Ventil
- 14: Leitungen
- 15: Einspritzkanal
- 16: Formkörper
- 17: Kavitätshohlraum
- 18: Auslaßleitung
- 19: Dichtung
- 20: Verbindungsleitung
- 20a: Rückschlagventil
- 21: Kühleinrichtung
- 25: Führungssäulen
- 26: Schließkolben
- 27: Fläche des stationären Werkzeugteils 11
- 28: Aufspannplatte des beweglichen Werkzeugteils 10

## Patentansprüche

1. Vorrichtung zum Verdichten eines gasförmigen Mediums mit wenigstens einem in wenigstens einer Arbeitskammer (6; 6₁ bis 6₄) bewegbaren Arbeitselement (7), **dadurch gekennzeichnet**, daß die Vorrichtung zwei relativ zueinander bewegbaren Werkzeugteilen (10, 11), wie Platten, Aufspannplatten oder dergleichen, eines Formwerkzeugs (W) zugeordnet ist, wobei im Zusammenwirken mit der Relativbewegung der Werkzeugteile (10, 11), mittels des Arbeitselements (7) eine Verdichtung des gasförmigen Mediums in der Arbeitskammer (6; 6₁ bis 6₄) erfolgt, welche zur Umgebung hin dicht abgeschlossen ist, und wobei sich das gasförmige Medium vor der Verdichtung unter einem beliebigen Druck in der Arbeitskammer (6; 6₁ bis 6₄) befindet.

2. Vorrichtung nach Anspruch 1, **dadurch gekennzeichnet**, daß die Verdichtung des Mediums in der Arbeitskammer (6; 6₁ bis 6₄) beim Werkzeugschließvorgang erfolgt und das verdichtete Medium für einen Verbraucher nutzbar ist.

3. Vorrichtung nach Anspruch 2, **dadurch gekennzeichnet**, daß das verdichtete Medium über eine Auslaßleitung (18) mit einem ein Zurückströmen des verdichteten Mediums verhindernden Einwegventil (12) dem Verbraucher zuführbar ist.

4. Vorrichtung nach einem der Ansprüche 1 bis 3, **dadurch gekennzeichnet**, daß das in der Arbeitskammer (6; 6₁ bis 6₄) verdichtete Medium dem Formhohlraum (17) des Formwerkzeugs (W) zur Druckbeaufschlagung zuführbar ist.

5. Vorrichtung nach einem der Ansprüche 1 bis 3, **dadurch gekennzeichnet**, daß das in der Arbeitskammer (6; 6₁ bis 6₄) verdichtete Medium einem Speicher (9) zuführbar ist.

6. Vorrichtung nach Anspruch 5, **dadurch gekennzeichnet**, daß der Speicher (9) wahlweise mit dem Verbraucher (8) verbindbar ist.

7. Vorrichtung nach einem der vorangehenden Ansprüche, **dadurch gekennzeichnet**, daß mehrere Arbeitskammern (6₁ bis 6₄) über Verbindungskanäle (20) zur Bildung einer Hintereinanderschaltung verbunden sind.

8. Vorrichtung nach Anspruch 7, **dadurch gekennzeichnet**, daß die Arbeitselemente (7) der Arbeitskammern (6; 6₁ bis 6₄) unterschiedlich große Wirkflächen haben.

9. Vorrichtung nach Anspruch 7 oder 8, **dadurch gekennzeichnet**, daß zwischen den hintereinandergeschalteten Arbeitskammern (6₁ bis 6₄) eine Zwischenkühlung (21) des verdichteten Mediums erfolgt.

10. Vorrichtung nach Anspruch 9, **dadurch gekennzeichnet**, daß die Zwischenkühlung mittels Wasser erfolgt.

11. Vorrichtung nach einem der vorangehenden Ansprüche, **dadurch gekennzeichnet**, daß in der Arbeitskammer (6; 6₁ bis 6₄) vor Beginn des Schließvorgangs des Formwerkzeugs (W) über eine Einlaßleitung (1a) ein vorbestimmter Mediumsdruck anliegt.

12. Vorrichtung nach Anspruch 11, **dadurch gekennzeichnet**, daß in der Einlaßleitung (1a) ein Steuerventil (2) angeordnet ist.

13. Vorrichtung nach einem der vorangehenden Ansprüche, **dadurch gekennzeichnet**, daß bei geschlossenem Formwerkzeug (W) der Druck konstant bleibt, und daß beim Öffnen des Formwerkzeugs (W) ein langsamer Druckabbau in der Arbeitskammer (6; 6₁ bis 6₄) erfolgt.

14. Vorrichtung nach Anspruch 13, **dadurch gekennzeichnet**, daß kurz vor dem vollständigen Öffnen des Formwerkzeugs (W) über ein Hilfsventil ein Druckabbau auf Umgebungsdruckverhältnisse erfolgt.

15. Vorrichtung nach einem der vorangehenden Ansprüche, **dadurch gekennzeichnet**, daß die Arbeitskammer (6) und das Arbeitselement (7) in die zugeordneten, relativ beweglichen Werkzeugteile (10, 11) integriert sind.

16. Vorrichtung nach einem der Ansprüche 1 bis 14, **dadurch gekennzeichnet**, daß die Arbeitskammer (6) und das Arbeitselement (7) gesondert an den relativ beweglichen Werkzeugteilen (10, 11) angebaut sind und bei der Bewegung der Werkzeugteile (10, 11) zusammenwirken.

17. Vorrichtung nach Anspruch 15 oder 16, **dadurch gekenzeichnet**, daß die Arbeitskammer (6) und das Arbeitselement (7) dem beweglichen Werkzeugteil (10) zugeordnet sind.

18. Vorrichtung nach Anspruch 15 oder 16, **dadurch gekennzeichnet**, daß die Arbeitskammer (6) an einem beweglichen Werkzeugteil (10) und das Arbeitselement (7) am stationären Werkzeugteil (11) vorgesehen ist.

19. Vorrichtung nach Anspruch 15, 16 oder 18, **dadurch gekennzeichnet**, daß das Arbeitselement (7) von einem Bolzen (7a) an einem der Werkzeugteile (10, 11) gebildet wird, welcher in einer zugeordneten Aufnahmebohrung (Arbeitskammer 6; 6₁ bis 6₄) am anderen Werkzeugteil (11, 10), wie Platten, Aufspannplatten oder dergleichen, aufgenommen ist.

20. Vorrichtung nach Anspruch 19, **dadurch gekennzeichnet**, daß der Bolzen (7a) und die Aufnahmebohrung zur Führung der Werkzeugteile (10, 11) bei ihrer Relativbewegung beim Öffnungs- und Schließvorgang des Formwerkzeugs (W) dienen.

21. Vorrichtung nach einem der vorangehenden Ansprüche, **dadurch gekennzeichnet**, daß das Formwerkzeug (W) ein Spritzgießformwerkzeug ist.

22. Vorrichtung nach Anspruch 21, **dadurch gekennzeichnet**, daß der Verbraucher (8) ein Injektor oder eine Düse ist, welche in den vom Formwerkzeug (W) gebildeten Formhohlraum (17) mündet.
